# EUROPEAN PATENT APPLICATION

(11) **EP 4 790 299 A1**
(43) Date of publication of application: **12.08.2026**
(21) Application number: 25211222.2
(22) Date of filing: 25.10.2025
(51) Int. Cl.: F16L 37/248, F16L 37/34, F16L 37/35

(54) **QUICK DISCONNECTOR**

(30) Priority: 07.02.2025 TW 114104543
(71) Applicant: Liu, Hsiu-Yun, Changhua City Changhua 50084 (TW)
(72) Inventor: Liu, Hsiu-Yun, Changhua City Changhua 50084 (TW)
(74) Representative: Cabinet Chaillot

(57) **Abstract**

A quick disconnector includes a first connector unit (10) and a second connector unit (20). The first connector unit (10) has a first connector body (11) defining a first flow passage (110), a first abut member (12) fixedly disposed in the first flow passage (110), a first blocking member (13) axially movably positioned in the first flow passage (110), and a first elastic member (14) disposed between the first blocking member (13) and the first abut member (12). The second connector unit (20) has a second connector body (21) defining a second flow passage (210), a second abut member (22) fixedly disposed in the second flow passage (210), an annular thrust member (25) axially movably positioned between the second abut member (22) and a second blocking member (23), and a second elastic member (24) disposed between the annular thrust member (25) and a second pipe connecting port (212).

## Description

### Field of the Invention

The present invention relates to a connector device, and more particularly to a quick disconnector.

### Background of the Invention

Quick disconnectors are extensively employed in industrial equipment and consumer products for connecting pipelines. They are particularly advantageous in applications requiring frequent coupling and decoupling of pipelines, thereby enhancing the operational efficiency of connection and disconnection.

Conventional quick disconnectors are typically equipped with an elastic member, such as a coil spring, a spring plate, or a rubber pad, which continuously applies a clamping force during the coupled state of two pipelines. This clamping force secures the pipelines against unintentional separation and maintains fluid communication therebetween.

However, with prolonged use, the elastic member is susceptible to fatigue caused by repeated compression and rebound cycles. Such fatigue reduces the clamping force of the quick disconnector, undermines the stability of the coupling, and compromises the reliability of fluid communication between the pipelines. Consequently, the pipelines may inadvertently separate during operation.

### Summary of the Invention

It is therefore an object of the present invention to provide a quick disconnector that enables a user to efficiently couple and decouple connector units, while preventing the two joined connector units from disengaging as a result of elastic fatigue of internal elastic members during use. The quick disconnector thereby achieves enhanced coupling stability.

The quick disconnector comprises a first connector unit and a second connector unit. The first connector unit includes a first blocking member axially movably disposed within a first flow passage and positioned adjacent to a first engagement port. The second connector unit includes a second blocking member and an annular thrust member, the second blocking member being connected to a second abut member, and the annular thrust member being axially movably disposed between the second blocking member and the second abut member. The first engagement port of the first connector unit is insertable into the second connector unit to push the annular thrust member, and simultaneously the second blocking member of the second connector unit is arranged to contact and push the first blocking member of the first connector unit, thereby opening fluid communication between the first flow passage and a second flow passage.

Preferably, the first connector unit further comprises a first elastic member and the second connector unit further comprises a second elastic member; wherein, when the first connector unit and the second connector unit are in an engaged state, the first blocking member compresses the first elastic member, and the annular thrust member compresses the second elastic member; and wherein, when the first connector unit and the second connector unit are in a separated state, elastic restoring forces of the first elastic member and the second elastic member respectively return the first blocking member and the annular thrust member to initial positions, thereby automatically closing the first flow passage and the second flow passage.

Preferably, the quick disconnector further comprises a latching unit, the latching unit including at least one latch member formed on a first connector body, and at least one latching groove formed on a second connector body, the latch member being receivable in the latching groove to secure the first connector unit and the second connector unit in the engaged state.

Preferably, the first blocking member comprises at least one first port, and when the first blocking member is displaced, the first port communicates with the first flow passage.

Preferably, when the second blocking member and the annular thrust member are displaced apart from one another, a hollow region is formed therebetween, enabling fluid communication through the second flow passage.

In one embodiment, a first outer diameter of the first connector body is smaller than a second outer diameter of the second connector body.

The technical effect of the present invention is that, when the first connector body and the second connector body are coupled, the first elastic member continuously exerts an elastic restoring force on the first blocking member, thereby causing the first blocking member and the second blocking member to abut against one another. Simultaneously, the second elastic member continuously exerts an elastic restoring force on the annular thrust member, thereby causing the annular thrust member and the first engagement port to abut against one another. Through the cooperative structural design of the first elastic member and the second elastic member, reliable communication between the first flow passage and the second flow passage is ensured, thereby preventing loss of fluid communication due to elastic fatigue of either elastic member.

### Brief Description of the Drawings

FIG. 1 is a schematic view illustrating an embodiment of the quick disconnector according to the present invention;
FIGS. 2A and 2B are exploded schematic views respectively illustrating components of a first connector unit and a second connector unit of the embodiment;
FIG. 3 is a sectional view taken along line III-III of FIG. 1, illustrating the internal structure of the embodiment;
FIG. 4 is a schematic view illustrating the structural configuration of the embodiment in a coupled state; and
FIG. 5 is a sectional view taken along line V-V of FIG. 4, illustrating the internal structure of the embodiment in the coupled state.

### Detailed Description of the Preferred Embodiments

The technical content and advantageous effects of the present invention will be clearly described with reference to the accompanying drawings and the following embodiments. It should be noted that the drawings are provided solely to illustrate the relative positional relationships between the components of the invention and are not intended to reflect the actual dimensions of the components.

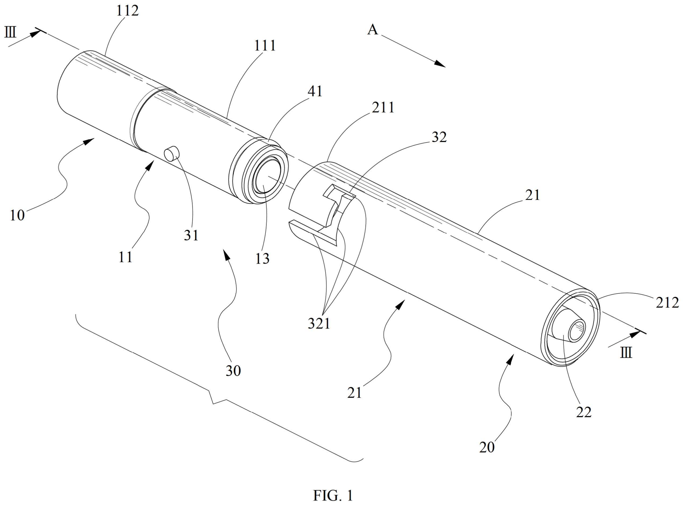

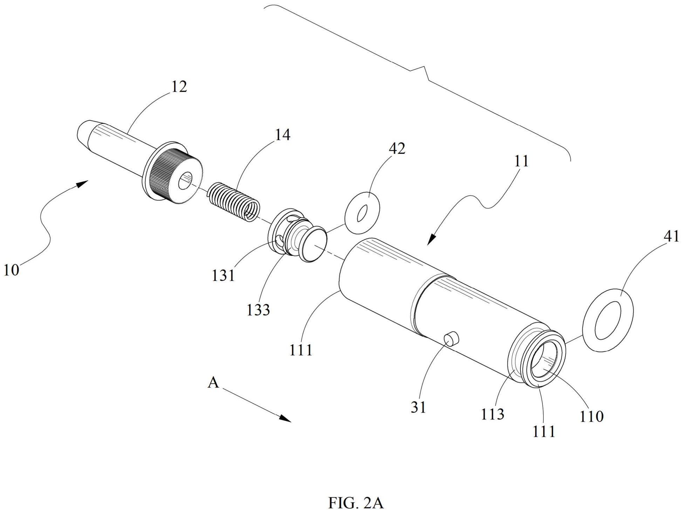

Referring to FIGS. 1, 2A, and 3, an embodiment of the quick disconnector according to the present invention is illustrated. The quick disconnector comprises a first connector unit 10, a second connector unit 20, and a latching unit 30.

The first connector unit 10 comprises a first connector body 11, a first abut member 12, a first blocking member 13, and a first elastic member 14.

The first connector body 11 is a hollow tubular body defining a first flow passage 110 that axially extends through the first connector body 11. The first connector body 11 has a first engagement port 111 and a first pipe connecting port 112 disposed at opposite axial ends thereof.

In the present embodiment, the first flow passage 110 includes a reduced-diameter section adjacent to the first engagement port 111, the inner diameter of which is smaller than the inner diameter of the remaining portion of the first flow passage 110. An inner sidewall of the first connector body 11 forms an inwardly projecting platform portion 114. The platform portion 114 is spaced from the first pipe connecting port 112 along an axial direction A and is located on a side of the reduced-diameter section opposite to the first engagement port 111. In addition, the first connector body 11 further comprises an outer annular groove 113 recessed into an outer peripheral wall of the first connector body 11 adjacent to the first engagement port 111. The outer annular groove 113 accommodates a sealing ring 41.

The first abut member 12 is fixedly disposed within the first flow passage 110 adjacent to the first pipe connecting port 112. The first abut member 12 defines a first sub-flow passage 121 in fluid communication with the first flow passage 110.

In this embodiment, a side of the first abut member 12 remote from the first pipe connecting port 112 forms a first abutting portion 122. The first abutting portion 122 abuts the platform portion 114, thereby securing the first abut member 12 within the first flow passage 110.

The first blocking member 13 is axially movably disposed within the first flow passage 110.

When the first connector unit 10 is not engaged with the second connector unit 20, the first blocking member 13 is positioned adjacent to the first engagement port 111, thereby closing the first flow passage 110 and preventing external communication through the first engagement port 111.

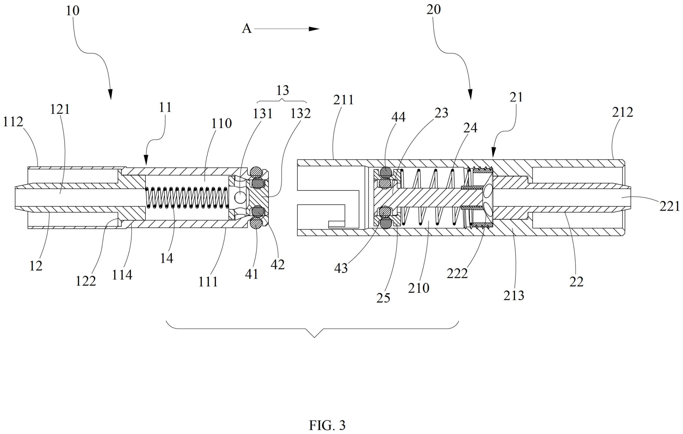

In the present embodiment, the first blocking member 13 comprises a cylindrical blocking portion 132, an outer annular groove 133, an annular sidewall extending axially from a side of the blocking portion 132 opposite to the first engagement port 111, and a plurality of first ports 131 spaced apart in the annular sidewall. The outer annular groove 133 is recessed into an outer peripheral wall of the blocking portion 132 and is configured to accommodate a sealing ring 42. The diameter of the blocking portion 132 substantially corresponds to the inner diameter of the reduced-diameter section. Accordingly, when the blocking portion 132 is positioned in the reduced-diameter section (as shown in FIG. 3), the first engagement port 111 is closed. Conversely, when the blocking portion 132 is displaced within the first flow passage 110 along the axial direction A away from the reduced-diameter section, the first flow passage 110 is placed in fluid communication with the exterior through the first engagement port 111.

The first elastic member 14 is disposed on the first abut member 12 and is positioned between the first blocking member 13 and the first abut member 12. In the present embodiment, the first elastic member 14 is configured as a coil spring capable of extending and contracting along the axial direction A.

In alternative embodiments, the first blocking member 13 may be provided with only a single first port 131. It should be understood that the first blocking member 13 may assume various structural configurations according to functional requirements, provided that at least one first port 131 is formed to allow communication with the first flow passage 110 while simultaneously closing the first engagement port 111. Accordingly, the present invention is not restricted to the foregoing illustrative example or the accompanying drawings.

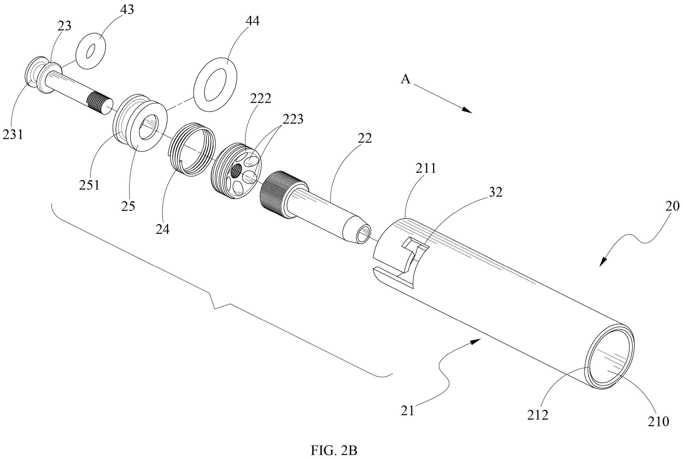

Referring now to FIGS. 1, 2B, and 3, the second connector unit 20 comprises a second connector body 21, a second abut member 22, a second elastic member 24, a second blocking member 23, and an annular thrust member 25. In this embodiment, a first outer diameter of the first connector body 11 is smaller than a second outer diameter of the second connector body 21, thereby enabling the first connector body 11, with the first engagement port 111 leading, to be inserted axially into the second connector body 21 through the second engagement port 211.

The second connector body 21 is a hollow tubular body defining a second flow passage 210 extending axially therethrough. The second connector body 21 has the second engagement port 211 and a second pipe connecting port 212 disposed at opposite axial ends thereof.

In the present embodiment, the second connector body 21 further comprises a protrusion 213 formed on an inner tube wall and extending inwardly into the second flow passage 210. The protrusion 213 is located between the second elastic member 24 and the second pipe connecting port 212.

The second abut member 22 is fixedly disposed in the second flow passage 210 at a position spaced apart from the second engagement port 211 along the axial direction A.

In this embodiment, the second abut member 22 is tubular, extends along the axial direction A, and defines a second sub-flow passage 221. The second abut member 22 further comprises a second abutting portion 222 abutting the protrusion 213, and a plurality of second ports 223 formed in the second abutting portion 222. The second ports 223 place the second flow passage 210 in fluid communication with the second sub-flow passage 221. The second abutting portion 222 is of a hollow annular configuration, and the second ports 223 are annularly spaced around the second abutting portion 222.

In some embodiments, the second abut member 22 may alternatively be provided with only a single second port 223 communicating the second flow passage 210 with the second sub-flow passage 221. It should be understood that the second abut member 22 may assume different structural configurations depending on functional requirements, provided that the second abut member 22 is capable of abutting against and being secured to the protrusion 213, while defining at least one second port 223 that fluidly communicates the second sub-flow passage 221 with the second flow passage 210. Thus, the second abut member 22 is not limited to the foregoing examples or to the illustrated embodiments.

The second blocking member 23 is connected to the second abut member 22 on a side facing the second engagement port 211. In the present embodiment, the second blocking member 23 is of cylindrical form and comprises an outer annular groove 231 recessed into its outer peripheral wall for accommodating a sealing ring 43.

The annular thrust member 25 is axially movably and annularly disposed around the second abut member 22 and the second blocking member 23. In this embodiment, the annular thrust member 25 is a hollow annular body having an inner annular diameter, an outer annular diameter, and an outer annular groove 251 recessed into its outer peripheral wall for receiving a sealing ring 44. The outer annular diameter of the annular thrust member 25 substantially corresponds to the inner diameter of the second flow passage 210, while the inner annular diameter substantially corresponds to the diameter of the second blocking member 23.

When the first connector unit 10 is not engaged with the second connector unit 20, the annular thrust member 25 is positioned adjacent to the second engagement port 211 and annularly surrounds the second blocking member 23. In this position, the annular thrust member 25 cooperates with the second blocking member 23 to close the second flow passage 210, thereby preventing external communication through the second engagement port 211. When the annular thrust member 25 is displaced within the second flow passage 210 along the axial direction A away from the second engagement port 211, the annular thrust member 25 separates from the second blocking member 23, thereby permitting external communication through the second engagement port 211.

The second elastic member 24 is annularly disposed around the second abut member 22 and positioned between the second abutting portion 222 and the annular thrust member 25. In this embodiment, the second elastic member 24 is a coil spring capable of extension and contraction along the axial direction A.

The latching unit 30 comprises at least one latch member 31, which is pressably formed on the first connector body 11, and at least one latching groove 32 formed on the second connector body 21. In the present embodiment, the latching groove 32 extends from the second engagement port 211 in a direction away from the second engagement port 211. The latching groove 32 receives the latch member 31 when the first connector body 11 is inserted into the second connector body 21 through the second engagement port 211, thereby securing the first connector body 11 and the second connector body 21 in a latched state. The latching groove 32 comprises a plurality of extending sections 321 connected end-to-end. Each extending section 321 extends in a direction different from that of the adjoining extending section 321, thereby enabling the latch member 31 to be retained at an end of the latching groove 32 remote from the second engagement port 211. This configuration prevents unintentional disengagement of the first connector body 11 and the second connector body 21 during use. Preferably, the extending section 321 immediately adjacent to the second engagement port 211 extends along the axial direction A.

In the embodiment shown, the latching unit 30 comprises two latch members 31 positioned on opposite sides of the first connector body 11, and two corresponding latching grooves 32 formed on opposite sides of the second connector body 21. This arrangement facilitates user operation, as the two latch members 31 can be simultaneously pressed with balanced force, thereby simplifying coupling and decoupling of the first connector unit 10 and the second connector unit 20.

In operation, force is applied to the two latch members 31, and the first connector body 11, with the first engagement port 111 leading, is inserted into the second connector body 21 through the second engagement port 211 and into the second flow passage 210.

During coupling, the first connector body 11 advances along the axial direction A, while the pressed latch members 31 move along the extending directions of their corresponding latching grooves 32. In this process, the first engagement port 111 pushes the annular thrust member 25 along the axial direction A into abutment with the second elastic member 24. The second elastic member 24 is thereby subjected to axial compression. When the annular thrust member 25 is displaced away from the second blocking member 23, the second flow passage 210 is opened and fluidly communicates externally through a hollow region of the annular thrust member 25 and the second engagement port 211. Simultaneously, the second blocking member 23 contacts the first blocking member 13, pushing the first blocking member 13 along the axial direction A into abutment with the first elastic member 14. When the first blocking member 13 is displaced away from the reduced-diameter section, the first flow passage 110 is opened and fluidly communicates externally through the first engagement port 111.

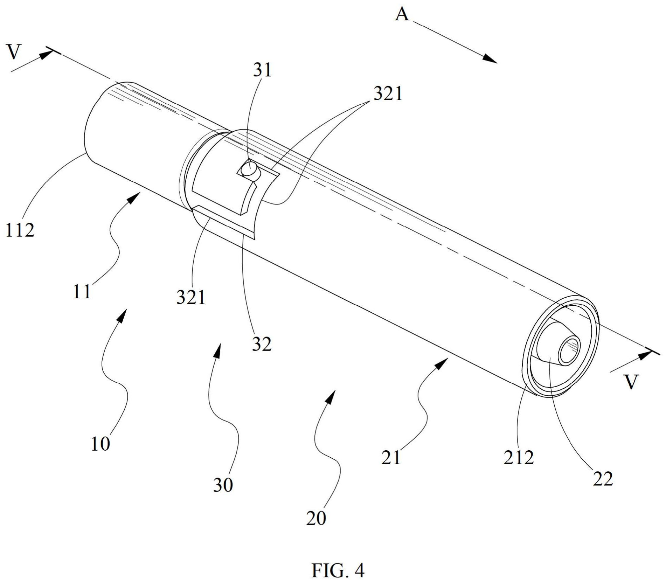

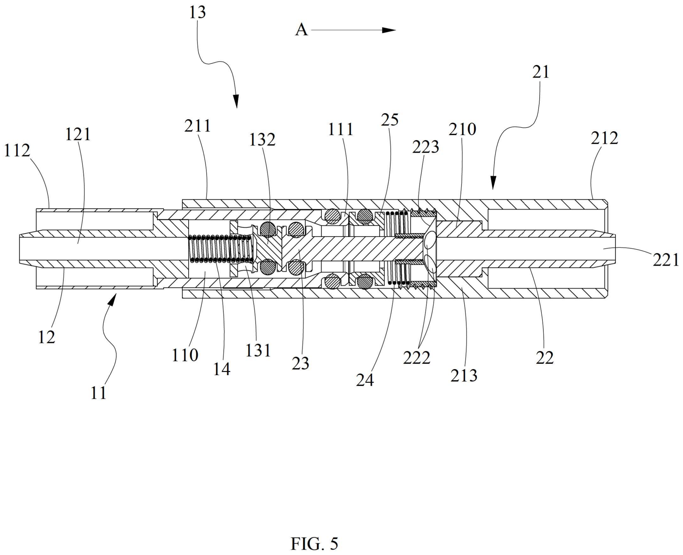

Referring to FIGS. 4 and 5, when the latch members 31 reach the ends of their respective latching grooves 32 opposite to the second engagement port 211, the applied force on the latch members 31 is released, allowing the latch members 31 to snap into the corresponding latching grooves 32. At this point, the first connector unit 10 and the second connector unit 20 are secured in an engaged state, as illustrated in FIGS. 4 and 5.

In the engaged state, the first blocking member 13 is urged by the second blocking member 23 to axially compress the first elastic member 14. As a result, the first elastic member 14 continuously applies a restoring force in the opposite direction to the first blocking member 13 along the axial direction A, thereby maintaining mutual abutment between the first blocking member 13 and the second blocking member 23. This configuration ensures continuous fluid communication among the first flow passage 110, the first ports 131, the first sub-flow passage 121, and the second flow passage 210.

Concurrently, in the engaged state, the annular thrust member 25 is urged by the first engagement port 111 to axially compress the second elastic member 24. Consequently, the second elastic member 24 continuously applies a restoring force in the opposite direction to the annular thrust member 25 along the axial direction A, thereby maintaining mutual abutment between the annular thrust member 25 and the first engagement port 111. This configuration maintains the annular thrust member 25 separated from the second blocking member 23, thereby ensuring continuous fluid communication among the second flow passage 210, the second ports 223, the second sub-flow passage 221, and the first flow passage 110.

By employing the structural configuration in which the first elastic member 14 is disposed in the first connector unit 10 and the second elastic member 24 is disposed in the second connector unit 20, the quick disconnector ensures that, in the engaged state, the first elastic member 14 and the second elastic member 24 independently provide restoring forces to the first blocking member 13 and the annular thrust member 25, respectively. This structural arrangement guarantees stable communication between the first flow passage 110 and the second flow passage 210, even if one of the elastic members experiences fatigue. Moreover, the structural design of the latching unit 30 not only facilitates user operation for coupling and decoupling of the first connector body 11 and the second connector body 21, but also further prevents inadvertent disengagement of the connector bodies during use.

In summary, when the quick disconnector is in the engaged state, the first elastic member 14 continuously exerts a restoring force to maintain abutment between the first blocking member 13 and the second blocking member 23, while the second elastic member 24 continuously exerts a restoring force to maintain abutment between the annular thrust member 25 and the first engagement port 111. The cooperative design of the first elastic member 14 and the second elastic member 24 reduces the risk of impaired fluid communication between the first flow passage 110 and the second flow passage 210 caused by fatigue of a single elastic member. In addition, the latching unit 30 enhances both ease of operation and structural security, thereby fulfilling the objectives of the present invention.

### List of Reference Signs

10 first connector unit
11 first connector body
110 first flow passage
111 first engagement port
112 first pipe connecting port
113, 133, 231, 251 outer annular groove
114 platform portion
12 first abut member
121 first sub-flow passage
122 first abutting portion
13 first blocking member
131 first port
132 blocking portion
14 first elastic member
20 second connector unit
21 second connector body
210 second flow passage
211 second engagement port
212 second pipe connecting port
213 protrusion
22 second abut member
221 second sub-flow passage
222 second abutting portion
223 second port
23 second blocking member
24 second elastic member
25 annular thrust member
30 latching unit
31 latch member
32 latching groove
321 extending section
41, 42, 43, 44 sealing ring
A axial direction

## Claims

1. A quick disconnector, comprising:
a first connector unit (10) including a first blocking member (13) axially movably disposed within a first flow passage (110) and positioned adjacent to a first engagement port (111); and
a second connector unit (20) including a second blocking member (23) and an annular thrust member (25), the second blocking member (23) being connected to a second abut member (22), and the annular thrust member (25) being axially movably disposed between the second blocking member (23) and the second abut member (22);
wherein the first engagement port (111) of the first connector unit (10) is insertable into the second connector unit (20) to push the annular thrust member (25), and simultaneously the second blocking member (23) of the second connector unit (20) is arranged to contact and push the first blocking member (13) of the first connector unit (10), thereby opening fluid communication between the first flow passage (110) and a second flow passage (210).

2. The quick disconnector according to claim 1, wherein the first connector unit (10) further comprises a first elastic member (14) and the second connector unit (20) further comprises a second elastic member (24);
wherein, when the first connector unit (10) and the second connector unit (20) are in an engaged state, the first blocking member (13) compresses the first elastic member (14), and the annular thrust member (25) compresses the second elastic member (24); and
wherein, when the first connector unit (10) and the second connector unit (20) are in a separated state, elastic restoring forces of the first elastic member (14) and the second elastic member (24) respectively return the first blocking member (13) and the annular thrust member (25) to initial positions, thereby automatically closing the first flow passage (110) and the second flow passage (210).

3. The quick disconnector according to claim 1, further comprising a latching unit (30), the latching unit (30) including at least one latch member (31) formed on a first connector body (11), and at least one latching groove (32) formed on a second connector body (21), the latch member (31) being receivable in the latching groove (32) to secure the first connector unit (10) and the second connector unit (20) in the engaged state.

4. The quick disconnector according to claim 1, wherein the first blocking member (13) comprises at least one first port (131), and when the first blocking member (13) is displaced, the first port (131) communicates with the first flow passage (110).

5. The quick disconnector according to claim 2, wherein, when the second blocking member (23) and the annular thrust member (25) are displaced apart from one another, a hollow region is formed therebetween, enabling fluid communication through the second flow passage (210).
